# EUROPEAN PATENT APPLICATION

(11) **EP 4 046 793 A1**
(43) Date of publication of application: **24.08.2022**
(21) Application number: 20877031.3
(22) Date of filing: 13.10.2020
(51) Int. Cl.: B32B 7/06, B05D 7/24

(54) **TRANSFER SHEET AND METHOD FOR PRODUCING MELAMINE DECORATIVE PANEL**

(30) Priority: 16.10.2019 JP 2019189628
(71) Applicant: TOPPAN INC., Tokyo 110-0016 (JP)
(72) Inventor: ISEYA Takahiro, Tokyo 110-0016 (JP); HARADA Chiho, Tokyo 110-0016 (JP)
(74) Representative: Hoffmann Eitle
(86) International application number: PCT/JP2020/038664
(87) International publication number: WO 2021/075435

(57) **Abstract**

There is provided a transfer sheet capable of preventing film cracking in thermocompression transfer. To that end, a base material layer (2), a transfer layer (3) provided on one surface (2a) side of the base material layer (2), and an adhesion layer (4) provided on an opposite surface (3a) side to the base material layer (2) of the transfer layer (3) are included, for example. A resin constituting the transfer layer (3) is an uncured ionizing radiation curable resin. A resin constituting the adhesion layer (4) is a thermosetting resin not containing a component causing the resin to exhibit liquid repellency.

## Description

### Technical Field

The present invention relates to a transfer sheet and a method for producing a melamine decorative panel.

### Background Art

Conventionally, a transfer sheet has been proposed in which a transfer layer and an adhesion layer are deposited in this order on one surface side of a base material layer and the transfer layer contains a cured product of an ionizing radiation curable resin (e.g., see PTL 1), for example. With respect to the transfer sheet described in PTL 1, the transfer sheet is deposited on a multi-layer body in which a core layer and an uncured melamine resin layer are deposited, and then the multi-layer body (thermocompression transfer) is heated and pressurized and the uncured melamine resin layer is cured, thereby creating a melamine decorative panel.

The multi-layer body deposited with the transfer sheet includes a base paper sheet, a pattern layer, and a liquid repellent layer imparting a gloss difference aligned with the pattern of the pattern layer (e.g., see PTL 2).

### Citation List

### Patent Literature

PTL 1: JP 2019-64132 A
PTL 2: JP 2018-176484 A

### Summary of Invention

### Technical Problem

However, when the transfer sheet described in PTL 1 is applied to the multi-layer body described in PTL 2, the ionizing radiation curable resin of the transfer layer may cause film cracking in the thermocompression transfer.

The present invention has been focused on the above-described point. It is an object of the present invention to provide a transfer sheet capable of preventing film cracking in the thermocompression transfer and a method for producing a melamine decorative panel.

### Solution to Problem

In order to solve the above-described problems, one aspect of the present invention is a transfer sheet including: (a) a base material layer; (b) a transfer layer provided on one surface side of the base material layer; and (c) an adhesion layer provided on the opposite surface side to the base material layer of the transfer layer, in which (d) a resin constituting the transfer layer is an uncured ionizing radiation curable resin and (e) a resin constituting the adhesion layer is a thermosetting resin not containing a component causing the resin to exhibit liquid repellency.

Another aspect of the present invention is (a) a method for producing a melamine decorative panel using the above-described transfer sheet, the method including: (b) dipping a first multi-layer body having a core layer and a liquid repellent layer partially provided on one surface side of the core layer in an aqueous melamine resin liquid, and then pressurizing and heating a second multi-layer body obtained by depositing the transfer sheet on the surface on the liquid repellent layer side of the dipped first multi-layer body to cure an uncured product of the aqueous melamine resin liquid contained in the core layer; c) peeling the base material layer of the transfer sheet from the first multi-layer body to transfer a part of the transfer layer of the transfer sheet to the first multi-layer body; and (d) irradiating the first multi-layer body with ionizing radiation to cure the ionizing radiation curable resin of the transfer layer.

### Advantageous Effects of Invention

According to one aspect of the present invention, the ionizing radiation curable resin of the transfer layer is in an uncured and flexible state and the thermosetting resin of the adhesion layer does not contain a component causing the resin to exhibit liquid repellency, and therefore a transfer sheet capable of preventing film cracking of a transfer layer due to thermocompression transfer and a method for producing a melamine decorative panel can be provided.

### Brief Description of Drawings

FIG. 1 is a cross-sectional view illustrating a transfer sheet according to an embodiment of the present invention; and
FIGS. 2A to 2C are views illustrating a method for using the transfer sheet. FIG. 2A is a cross-sectional view illustrating a first multi-layer body, FIG. 2B is a cross-sectional view illustrating a second multi-layer body, and FIG. 2C is a cross-sectional view illustrating a melamine decorative panel.

### Description of Embodiments

Next, an embodiment of the present invention will now be described with reference to the drawings.

Herein, the drawings are schematic, and the relationship between the thickness and the planar dimension, the ratio of the thickness of each layer, and the like are different from the actual relationship, ratio, and the like. The embodiment described below exemplifies a configuration for embodying the technical idea of the present invention. The technical idea of the present invention does not specify materials, shapes, structures, and the like of constituent parts to the following materials, shapes, structures, and the like. The technical idea of the present invention can be variously altered within the technical scope specified by Claims.

### (Transfer sheet)

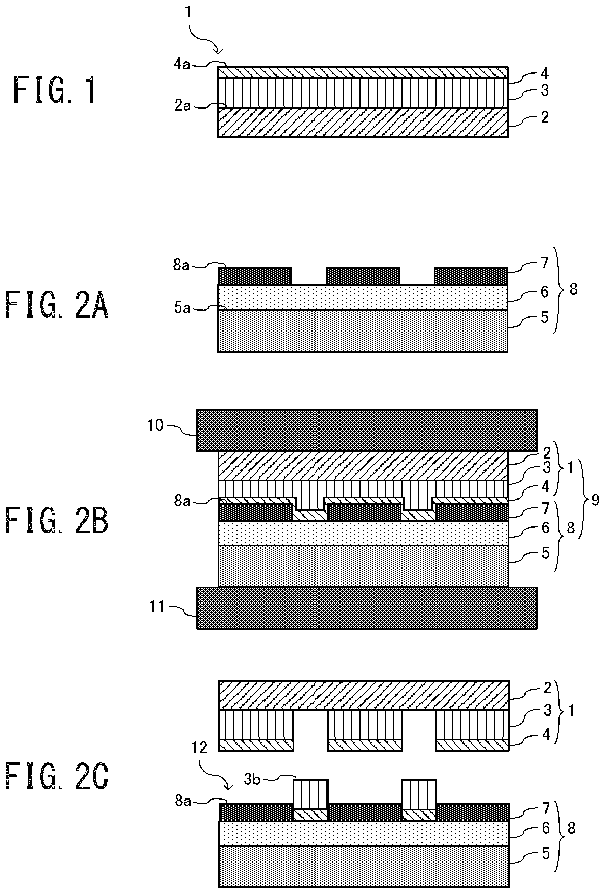

As illustrated in FIG. 1, a transfer sheet 1 of this embodiment is formed by a transfer layer 3 and an adhesion layer 4 deposited in this order on one surface 2a side of a base material layer 2.

### (Base material layer)

The base material layer 2 is a layer serving as the base of the transfer sheet 1. A material of the base material layer 2 is preferably a material having high flexibility from the viewpoint of ease of peeling after transfer. For example, a thin paper sheet can be adopted which has a surface laminated with polyester resins, such as a polyethylene terephthalate resin, a polybutylene terephthalate resin, a polyethylene naphthalate-isophthalate copolymer resin, and a polyester thermoplastic elastomer; polyolefin resins, such as a polyethylene resin, a polypropylene resin, a polymethylpentene resin, and an olefin thermoplastic elastomer; or polyolefin resins. In particular, the polyester resins are preferable from the viewpoint of heat resistance and dimensional stability.

The one surface 2a of the base material layer 2 is partially or entirely subjected to at least one of mirror finishing and matte finishing. The gloss value of a matte-finished part is not particularly limited.

### (Transfer layer)

The transfer layer 3 is a layer to be transferred to a first multi-layer body 8 (described later) used in producing a melamine decorative panel 12. As a resin constituting the transfer layer 3, an uncured ionizing radiation curable resin is adopted. As the ionizing radiation curable resin, a resin can be adopted which causes a cross-linking polymerization reaction by irradiation with ionizing radiation and changes into a three-dimensional polymer structure, for example. As the ionizing radiation, electromagnetic waves or charged particle beams having an energy quantum capable of polymerizing or cross-linking molecules can be adopted, for example. For example, ultraviolet rays (UV), electron beams (EB), electromagnetic waves, and charged particle beams are mentioned. The ionizing radiation curable resin is preferably at least one of an ultraviolet curable resin and an electron beam curable resin in terms of having a tack-free property that the resin does not adhere only by heat drying and having an after-cure property that the resin can be cured by irradiation with ultraviolet rays or electron beams even after thermocompression transfer, for example.

The ultraviolet curable resin is not particularly limited, and a transparent resin can be adopted which contains, as a main component, a prepolymer (including an oligomer) and/or a monomer having a radically polymerizable double bond in the molecules and can be polymerized and crosslinked by irradiation with ultraviolet rays. As the prepolymer or the monomer, compounds can be adopted which has, in the molecules, radically polymerizable unsaturated groups, such as a (meth)acryloyl group and a (meth)acryloyloxy group, cationically polymerizable functional groups, such as an epoxy group, and the like. Further, a polyene/thiol prepolymer obtained by combining polyene and a polythiol is also preferable. Herein, the (meth)acryloyl group means an acryloyl group or a methacryloyl group.

The prepolymer having radically polymerizable unsaturated groups includes polyester (meth)acrylate, urethane (meth)acrylate, epoxy (meth)acrylate, melamine (meth)acrylate, triazine (meth)acrylate, and silicone (meth)acrylate, for example. The molecular weight thereof is preferably about 250 to 100000.

The monomer having radically polymerizable unsaturated groups includes methyl (meth)acrylate, 2-ethylhexyl (meth)acrylate, and phenoxyethyl (meth)acrylate, for example. Further, diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa (meth) acrylate, and the like are mentioned, for example.

The prepolymer having cationically polymerizable functional groups includes prepolymers of epoxy resins, such as a bisphenol epoxy resin and a novolak epoxy compound, and vinyl ether resins, such as fatty acid vinyl ether and aromatic vinyl ether, for example. The thiol includes polythiols, such as trimethylolpropane trithioglycolate and pentaerythritol tetrathioglycolate, for example. The polyene includes those in which allyl alcohol is added to both ends of polyurethane formed of diol and diisocyanate, for example.

The electron beam curable resin is not particularly limited and includes unsaturated polyesters, vinyl group-containing compounds, acrylic acid (methacrylic acid) ester compounds, and the like. The acrylic acid ester compounds include one type or two or more types of oligomers or prepolymers, such as urethane acrylate, polyester acrylate, polyol acrylate, epoxy acrylate, and polyester acrylate having one or more acrylic groups, for example.

### (Adhesion layer)

The adhesion layer 4 is a layer for improving the adhesion between the transfer layer 3 and the first multi-layer body 8. As a resin constituting the adhesion layer 4, thermosetting resins, such as a urethane resin and an acrylic resin, can be adopted, for example. As the thermosetting resin, a resin not containing a component causing the resin to exhibit liquid repellency, such as silicon oil, is preferably adopted. Thus, a melamine resin left non-repelled on a liquid repellent layer 7 of the first multi-layer body 8 can be made to adhere to the adhesion layer 4 in thermocompression transfer, preventing the whitening of the liquid repellent layer 7 due to the melamine resin left non-repelled. As the resin not containing a component causing the resin to exhibit liquid repellency, a resin in which a surface 4a on the opposite surface side to the transfer layer 3 of the adhesion layer 4 has a contact angle with respect to pure water of 90 degrees or less is preferable, a resin having such a contact angle of 60 degrees or less is more preferable, and a resin having such a contact angle of 30 degrees or less is the most preferable.

The adhesion layer 4 has a property of being bonded to a pattern layer 6 (described later) of the first multi-layer body 8 but not bonded to a liquid repellent layer 7 (described later) by the thermocompression transfer in producing the melamine decorative panel 12.

### (Method for using transfer sheet)

Next, a method for using the transfer sheet 1 according to this embodiment is described. FIGS. 2A to 2C are views illustrating a method for producing the melamine decorative panel 12 using the transfer sheet 1.

First, as illustrated in FIG. 2A, the first multi-layer body 8 is formed in which the pattern layer 6 and the liquid repellent layer 7 are deposited in this order on one surface 5a side of a core layer 5. The liquid repellent layer 7 is partially provided on the one surface 5a of the core layer 5 to impart a gloss difference between a part where the liquid repellent layer 7 is present and a part where the liquid repellent layer 7 is not present.

Herein, as the core layer 5, a phenol resin impregnated paper sheet or a multi-layer body thereof is usable, for example. The phenol resin impregnated paper sheet is obtained by impregnating a kraft paper sheet with a resin containing a phenol resin as a main component and drying the kraft paper sheet, for example. As the core layer 5, a glass cloth or a glass nonwoven fabric may be used, or a prepreg containing a glass cloth or a glass nonwoven fabric as a base material may be used. The prepreg is obtained by impregnating a glass cloth or a glass nonwoven fabric with a resin composition containing a thermoplastic resin, a thermosetting resin, or the like, for example.

The pattern layer 6 is a layer for imparting a design by a pattern to the melamine decorative panel 12. As the pattern, a wood grain pattern can be adopted, for example. The pattern layer 6 can be provided by a known printing method. As a printing ink, an aqueous ink is preferable from the viewpoint of resin impregnation suitability.

The liquid repellent layer 7 is a layer for imparting a design by the gloss difference to the melamine decorative panel 12. As the gloss difference, a gloss difference of a vessel pattern aligned with the wood grain pattern of the pattern layer 6 can be adopted, for example. As a resin constituting the liquid repellent layer 7, curable resins, such as thermosetting resins or ionizing radiation curable resins having a urethane bond, e.g., two-component curable urethane resins, are usable, for example. As the curable resins, thermosetting resins, such as a melamine resin, an epoxy resin, a urea resin, a phenol resin, an unsaturated polyester resin, a diallyl phthalate resin, a benzoguanamine resin, a urethane resin, an aminoalkyd resin, and a silicone resin; ionizing radiation curable resins, such as a (meth) acrylate resin and an unsaturated polyester resin; and the like can be adopted.

Subsequently, the formed first multi-layer body 8 is dipped in an aqueous melamine resin liquid, and then the transfer sheet 1 is deposited on a surface 8a on the liquid repellent layer 7 side of the first multi-layer body 8, thereby forming a second multi-layer body 9. At that time, the aqueous melamine resin liquid left non-repelled on the liquid repellent layer 7 is removed by the adhesion layer 4 of the transfer sheet 1. Subsequently, as illustrated in FIG. 2B, the formed second multi-layer body 9 is interposed between two mirror plates 10, 11, and then the second multi-layer body 9 is pressurized and heated and an uncured product of the aqueous melamine resin liquid contained in the core layer 5 is cured (thermocompression transfer). By the thermocompression transfer, the transfer layer 3 of the transfer sheet 1 is bonded to the pattern layer 6 (hereinafter, also referred to as "cured melamine resin layer 6") via the adhesion layer 4. Parts where the liquid repellent layer 7 is provided of the pattern layer 6 are not bonded to the adhesion layer 4.

Subsequently, as illustrated in FIG. 2C, the base material layer 2 is peeled from the first multi-layer body 8. When the base material layer 2 is peeled from the first multi-layer body 8, parts bonded to the cured melamine resin layer 6 of the transfer layer 3 and the adhesion layer 4 remain on the first multi-layer body 8 side. Thus, a surface 3b on the base material layer 2 side of the transfer layer 3 is exposed, and the surface of the melamine decorative panel 12 is formed by the exposed surface 3b. On the other hand, parts not bonded to the cured melamine resin layer 6 of the transfer layer 3 and the adhesion layer 4, i.e., parts in contact with the liquid repellent layer 7, remain on the base material layer 2 side. Thus, the liquid repellent layer 7 is exposed, the surface of the melamine decorative panel 12 is formed by the exposed liquid repellent layer 7, and a design is imparted by the gloss difference between the part where the liquid repellent layer 7 is present and the part where the liquid repellent layer 7 is not present. Subsequently, the first multi-layer body 8 after peeling is irradiated with ionizing radiation and the ionizing radiation curable resin of the transfer layer 3 is cured, thereby completing the melamine decorative panel 12.

As described above, in the transfer sheet 1 according to this embodiment, the resin constituting the transfer layer 3 is the uncured ionizing radiation curable resin, and therefore the flexibility of the transfer layer 3 can be improved when the thermocompression transfer is executed, and thus the transfer sheet 1 capable of preventing film cracking of the transfer layer 3 due to the thermocompression transfer can be provided.

Further, the intralayer strength of the transfer layer 3 is lowered, and therefore, when the base material layer 2 is peeled from the first multi-layer body 8, the transfer layer 3 is broken along the outer edge of the liquid repellent layer 7 of the first multi-layer body 8, so that the transfer of the transfer layer 3 onto the repellent layer 7 can be prevented and the transfer layer 3 can be selectively transferred, enabling the gloss adjustment by the liquid repellent layer 7.

When the transfer layer 3 contains the ionizing radiation curable resin after curing, the intralayer strength of the transfer layer 3 is high, and therefore the transfer layer 3 is not broken when the base material layer 2 is peeled from the first multi-layer body 8, so that the transfer layer 3 is transferred also onto the liquid repellent layer 7 and the transfer layer 3 cannot be selectively transferred, making it difficult to adjust the gloss.

In the transfer sheet 1 according to this embodiment, the resin constituting the adhesion layer 4 is the thermosetting resin not containing a component causing the resin to exhibit liquid repellency. Therefore, by bringing the adhesion layer 4 into contact with the liquid repellent layer 7 in producing the melamine decorative panel 12, for example, the aqueous melamine resin liquid left non-repelled on the liquid repellent layer 7 can be absorbed by the adhesion layer 4, so that the whitening of the melamine decorative panel 12 can be prevented. Further, the transfer layer 3 can be properly transferred to places where the liquid repellent layer 7 is not present of the surface of the first multi-layer body 8.

When the adhesion layer 4 contains a thermosetting resin containing a component causing the resin to exhibit liquid repellency, the aqueous melamine resin liquid left non-repelled on the liquid repellent layer 7 is not absorbed by the adhesion layer 4 in producing the melamine decorative panel 12, so that the aqueous melamine resin liquid left non-repelled is not removed, causing whitening in the melamine decorative panel 12. Further, the transfer layer 3 is not properly transferred also to places where the liquid repellent layer 7 is not present of the surface of the first multi-layer body 8.

In the transfer sheet 1 according to this embodiment, the ionizing radiation curable resin is at least one of the ultraviolet curable resin and the electron beam curable resin. Therefore, for example, by irradiating the transfer layer 3 with ultraviolet rays or electron beams after the thermocompression transfer in producing the melamine decorative panel 12, the strength of the melamine decorative panel 12 can be increased while preventing the film cracking of the transfer layer 3 due to the thermocompression transfer.

The method for producing the melamine decorative panel 12 according to this embodiment includes a step of dipping the first multi-layer body 8 having the core layer 5 and the liquid repellent layer 7 partially provided on the one surface 5a side of the core layer 5 in the aqueous melamine resin liquid, and then pressurizing and heating the second multi-layer body 9 obtained by depositing the transfer sheet 1 on the surface on the liquid repellent layer 7 side of the dipped first multi-layer body 8 and cure the uncured product of the aqueous melamine resin liquid contained in the core layer 5, the step of peeling the base material layer 2 of the transfer sheet 1 from the first multi-layer body 8 to transfer a part of the transfer layer 3 of the transfer sheet 1 to the first multi-layer body 8, and the step of irradiating the first multi-layer body 8 with ionizing radiation to cure the ionizing radiation curable resin of the transfer layer 3. Therefore, the melamine decorative panel 12 selectively subjected to gloss adjustment can be easily obtained. Further, the melamine decorative panel 12 excellent in ease of cleaning, scratch resistance, and fingerprint resistance and having a hand touch feeling can be obtained.

### (Examples)

Hereinafter, Examples and Comparative Examples of the transfer sheet 1 according to the embodiment of the present invention are described. The present invention is not limited to Examples below.

### (Example 1)

First, as the base material layer 2, a raw fabric in which a polypropylene resin was laminated on one surface of a thin paper sheet was prepared. The basis weight of the thin paper sheet was set to 40 g/m². The thickness of the polypropylene was set to 16 µm. The surface gloss value of the raw fabric was set to 1.0 (value measured by a 60° gloss meter manufactured by HORIBA). Subsequently, a one-component curable type ultraviolet curable resin having a tack-free property achieved only by heat drying was applied onto the surface on the polypropylene resin side of the base material layer 2 to form the transfer layer 3. The application amount after drying of the ultraviolet curable resin was set to 6 g/m². Subsequently, a urethane resin not containing silicon oil was applied onto the one surface 3a of the transfer layer 3 to form the adhesion layer 4. It is intended that this urethane resin does not contain silicon oil as a component that is normally contained to produce liquid repellency, and the urethane resin is naturally a resin that also does not contain components causing the resin to exhibit liquid repellency other than silicon oil. The application amount after drying of the urethane resin was set to 2 g/m². Thus, the transfer sheet 1 of Example 1 was prepared.

The ultraviolet curable resin and the urethane resin were applied using a gravure seven-color printing machine for producing decorative sheets. The printing speed was set to 100 m/min. As the drying conditions, each layer was dried at 100°C, and then, after the application of all layers, the resins were sufficiently dried by being sequentially dried at a two-stage temperature setting of 120°C, 180°C in an after-drying zone divided into two 5 m zones.

Subsequently, the first multi-layer body 8 was dipped in an aqueous melamine resin liquid, and then the first multi-layer body 8 dipped in the aqueous melamine resin liquid was superimposed on the created transfer sheet 1, thereby forming the second multi-layer body 9. Subsequently, the formed second multi-layer body 9 was interposed between the two mirror plates 10, 11, and the second multi-layer body 9 was pressurized and heated (thermocompression transfer). The thermocompression transfer was performed using a hot press under the conditions of a pressure of 100 kg/cm², a molding temperature of 160°C, and a heating and pressurizing time of 10 minutes. Subsequently, the base material layer 2 was peeled from the first multi-layer body 8, and then the first multi-layer body 8 after the peeling was irradiated with ionizing radiation and the ionizing radiation curable resin of the transfer layer 3 was cured. Thus, the melamine decorative panel 12 of Example 1 was prepared.

Herein, a wood grain pattern was adopted as the pattern layer 6 of the first multi-layer body 8, and a vessel pattern was adopted as the liquid repellent layer 7.

### (Comparative Example 1)

In Comparative Example 1, an ultraviolet curable resin of the transfer layer 3 was cured before thermocompression transfer. Other than that, the transfer sheet 1 and the melamine decorative panel 12 of Comparative Example 1 were created in the same manner as in Example 1.

### (Comparative Example 2)

In Comparative Example 2, a urethane resin containing silicon oil was used as a material of the adhesion layer 4. Other than that, the transfer sheet 1 and the melamine decorative panel 12 of Comparative Example 2 were created in the same manner as in Example 1.

### (Comparative Example 3)

In Comparative Example 3, the transfer sheet 1 and the melamine decorative panel 12 of Comparative Example 3 were created using a shaped sheet in place of the transfer sheet 1 by transferring the surface pattern of the shaped sheet to the surface of the first multi-layer body 8 by performing a thermocompression transfer in which the shaped sheet was pressed against the surface of the first multi-layer body 8, and then peeling the shaped sheet.

### (Performance evaluation)

The melamine decorative panels 12 of Example 1, Comparative Examples 1, 2, and 3 were subjected to the following performance evaluation.

### (Design feeling evaluation)

In a design feeling evaluation, the design of each of the melamine decorative panels 12 was visually evaluated. In particular, judges focused on the whitening of the vessel pattern. The number of the judges was set to 10. Then, a case where the number of the judges who judged that the design of the melamine decorative panel 12 was good was 0 was evaluated as a failure "×", a case where the number of the judges was 1 to 6 was evaluated as a failure "Δ", a case where the number of the judges was 7 to 9 was evaluated as a success "∘", and a case where the number of the judges was 10 was evaluated as a success "⊚".

### (Evaluation results)

The evaluation results are shown in Table 1.

**[Table 1]**

| | Design feeling |
|---|---|
| Example 1 | ⊚ |
| Comparative Example 1 | × |
| Comparative Example 2 | × |
| Comparative Example 3 | Δ |

As shown in Table 1 above, in the melamine decorative panel 12 of Example 1, the evaluation result of "Design feeling evaluation" was a success "⊚". Specifically, in Example 1, no whitening was observed, a selective gloss difference was observed, and a three-dimensional feeling and a shining feeling of the wood grain were able to be felt, and thus the "Design feeling evaluation" was "⊚".

On the other hand, in the melamine decorative panel 12 of Comparative Example 1, the ultraviolet curable resin of the transfer layer 3 was cured before the thermocompression transfer, and therefore the transfer layer 3 caused film cracking in the thermocompression transfer and the melamine decorative panel 12 was entirely whitened, and thus the "Design feeling evaluation" was a failure "×". In the melamine decorative panel 12 of Comparative Example 2, the material of the adhesion layer 4 was the urethane resin containing silicon oil, and therefore the aqueous melamine resin liquid was not completely repelled and left on the liquid repellent layer 7, the aqueous melamine resin liquid left non-repelled caused whitening, and the transfer layer 3 was not transferred to the first multi-layer body 8 even in places where the liquid repellent layer 7 was not present, and thus the "Design feeling evaluation" was "×". In the melamine decorative panel 12 of Comparative Example 3, the surface pattern was transferred using the shaped sheet in place of the transfer sheet 1, and therefore whitening occurred due to the aqueous melamine resin liquid left non-repelled on the liquid repellent layer 7, and thus the "Design feeling evaluation" was "Δ".

Hence, it was confirmed that the transfer sheet 1 of Example 1 can prevent the film cracking of the transfer layer 3 due to the thermocompression transfer, unlike the transfer sheet 1 of Comparative Example 1. Further, unlike the transfer sheets 1 of Comparative Examples 2, 3, the transfer sheet 1 of Example 1 can remove the aqueous melamine resin liquid left non-repelled on the liquid repellent layer 7 and can prevent the whitening of the melamine decorative panel 12.

### Reference Signs List

- 1: transfer sheet
- 2: base material layer
- 3: transfer layer
- 4: adhesion layer
- 5: base paper sheet
- 6: pattern layer
- 7: liquid repellent layer
- 8: first multi-layer body
- 9: second multi-layer body
- 10: mirror plate
- 11: mirror plate
- 12: melamine decorative panel

## Claims

1. A transfer sheet comprising:
a base material layer;
a transfer layer provided on one surface side of the base material layer; and
an adhesion layer provided on an opposite surface side to the base material layer of the transfer layer, wherein
a resin constituting the transfer layer is an uncured ionizing radiation curable resin, and
a resin constituting the adhesion layer is a thermosetting resin not containing a component causing the resin to exhibit liquid repellency.

2. The transfer sheet according to claim 1, wherein the ionizing radiation curable resin is at least one of an ultraviolet curable resin and an electron beam curable resin.

3. A method for producing a melamine decorative panel using the transfer sheet according to claim 1 or 2, the method comprising:
dipping a first multi-layer body having a core layer and a liquid repellent layer partially provided on one surface side of the core layer in an aqueous melamine resin liquid, and pressurizing and heating a second multi-layer body obtained by depositing the transfer sheet on a surface on a side of the liquid repellent layer of the dipped first multi-layer body to cure an uncured product of the aqueous melamine resin liquid contained in the core layer;
peeling the base material layer of the transfer sheet from the first multi-layer body to transfer a part of the transfer layer of the transfer sheet to the first multi-layer body; and
irradiating the first multi-layer body with ionizing radiation to cure the ionizing radiation curable resin of the transfer layer.
